# EUROPÄISCHE PATENTSCHRIFT

(11) **EP 1 331 138 B1**
(45) Veröffentlichungstag und Bekanntmachung des Hinweises auf die Patenterteilung: **15.06.2011**
(21) Anmeldenummer: 03001511.9
(22) Anmeldetag: 23.01.2003
(51) Int. Cl.: B60R 13/02, B60R 13/04

(54) **Deckel zum Verschliessen einer Wandöffnung**
Lid for closing an opening in a wall
Couvercle de fermeture d'une ouverture dans une paroi

(30) Priorität: 28.01.2002 DE 10203416
(43) Veröffentlichungstag der Anmeldung: 30.07.2003
(73) Patentinhaber: Faurecia Exteriors GmbH, 31655 Stadthagen (DE)
(72) Erfinder: Burkhardt, Steffen, 71083 Herrenberg (DE); Preissler, Dietmar, 91781 Hagenbuch (DE); Sautner, Anton, 91757 Treuchtlingen (DE)
(74) Vertreter: Scherzberg, Andreas Hans

(56) Entgegenhaltungen:
- EP-A- 0 713 806
- DE-A- 2 936 789
- DE-A- 19 922 847

## Beschreibung

Die vorliegende Erfindung betrifft einen Deckel zum Verschließen einer Öffnung, die in einer Wand, insbesondere eines Verkleidungsteils eines Kraftfahrzeugs, ausgebildet ist.

Aus der DE 29 36 789 C2 ist ein Stoßfänger eines Kraftwagens bekannt, in den eine Öffnung eingebracht ist, durch die hindurch eine Schleppeinrichtung des Fahrzeugs zugänglich ist. Zum Verschließen dieser Öffnung ist am Stoßfänger eine Klappe gelagert, die zwischen einer gesicherten Schließstellung, in der sie die Schleppeinrichtung verdeckt, und einer gesicherten Öffnungsstellung verschwenkbar ist, in der die Schleppvorrichtung zugänglich ist. Die Klappe verbleibt in ihrer Öffnungsstellung am Stoßfänger.

Die vorliegende Erfindung beschäftigt sich mit dem Problem, für einen Deckel der eingangs genannten Art eine verbesserte Ausführungsform anzugeben, die insbesondere die Gefahr von Beschädigungen an der Wand und/oder am Deckel beim Verschwenken des Deckels reduziert.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, mit Hilfe von Führungskonturen für die Schließstellung des Deckels und/oder für seine Kippstellung jeweils eine vorbestimmte, definierte Relativlage zwischen Deckel und Wand zu erreichen. Durch diese Zwangsführung des Deckels beim Verschwenken zwischen zwei definierten Endstellungen kann die Schwenkkinematik des Deckels so vorgegeben werden, daß ein unerwünschter, schädlicher Kontakt zwischen Deckel und Wand vermieden wird, so daß Beschädigungen der Wand und/oder des Deckels vermieden werden können.

Von besonderem Interesse ist die Erfindung dann, wenn es sich bein der Wand um ein lackiertes Verkleidungsteil, insbesondere eines Kraftfahrzeugs handelt, z.B. um eine lackierte Stoßfängerverkleidung. Üblicherweise ist für eine gehobene ästhetische Wirkung auch der Deckel in der gleichen Weise wie das Verkleidungsteil lackiert. Die Lackierung des Verkleidungsteils ist am Innenrand der Öffnung und die Lackierung des Deckels ist am Außenrand des Deckels vergleichsweise kontaktempfindlich. Mit Hilfe der Erfindung kann für die Schließstellung des Deckels ein hinreichender Spalt zwischen Deckel und Wand gewährleistet werden, wobei gleichzeitig bei der Überführung zwischen Schließstellung und Kippstellung stets ein hinreichender Abstand zwischen Deckel und Wand gewährleistet werden kann. Ein Kontakt des Deckelaußenrands mit dem Öffnungsinnenrand kann somit wirksam vermieden werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Rückansicht auf einen Deckel nach Erfindung,
- Fig. 2: eine Schnittansicht durch den in eine Öffnung einer Wand eingesetzten Deckel gemäß den Schnittlinien II in Fig. 1.

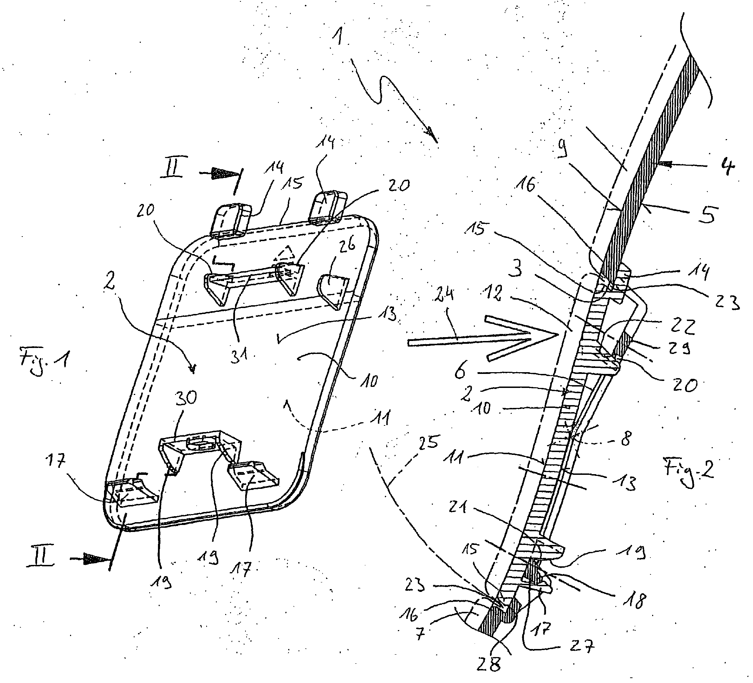

Entsprechend den Fig. 1 und 2 umfaßt eine Deckel-Wand-Anordnung 1 einen Deckel 2 zum Verschließen einer Öffnung 3, die in eine Wand 4 eingebracht ist. Diese Wand 4 kann beispielsweise durch ein Verkleidungsteil eines Kraftfahrzeugs gebildet sein. Vorzugsweise ist die Wand 4 durch eine Stoßfängerverkleidung eines Kraftfahrzeugs, insbesondere eines Personenkraftwagens, gebildet, wobei dort die Öffnung 3 vorzugsweise dazu dient, durch die Stoßfängerverkleidung (Wand 4) hindurch einen Zugang zu einer hier nicht gezeigten Schleppeinrichtung, wie z.B. Abschleppöse oder Abschlepphaken, zu ermöglichen.

Die Wand 4 besitzt an einer in Fig. 2 rechts dargestellten Innenseite 5 im Bereich der Öffnung 3 eine Auflagekontur 6 für den Deckel 2. Diese Auflagekontur 6 ist zweckmäßig entlang eines Öffnungsrands 16 umlaufend angeordnet und so ausgebildet bzw. geformt, daß der in die Öffnung 3 eingesetzte Deckel 2 zwischen einer in Fig. 2 wiedergegebenen Schließstellung.und einer Kippstellung um eine Kippachse 8 verschwenkbar ist. In Fig. 2 verläuft der Schnitt so, daß die Kippachse 8 senkrecht auf der Zeichnungsebene steht. Die Kippachse 8 erstreckt sich parallel zum Deckel 2.

In der Schließstellung verschließt der Deckel 2 die Öffnung 3. Im unterschied dazu ist der Deckel 2 in der Kippstellung an einer der Wandinnenseite 5 gegenüberliegenden Außenseite 9 der Wand 4 aus der Öffnung 3 herausnehmbar bzw. in die Öffnung 3 einsetzbar. Hierzu besitzt der Deckel 2 einen Wandabschnitt 10, der im wesentlichen komplementär zur Öffnung 3 geformt ist, so daß dieser Wandabschnitt 10 in der Schließstellung des Deckels 2 die Öffnung 3 im wesentlichen ausfüllt. Zweckmäßig ist eine in der Schließstellung von der Wandinnenseite 5 abgewandte Vorderseite 11 des Wandabschnitts 10 so geformt, daß sie in der Schließstellung einen formintegrierten Bestandteil der Wand 4 bildet. Das heißt, der Deckel 2 ist an seiner Vorderseite 11 an die Außenkontur der Wand 4 angepaßt. In der bevorzugten Ausführungsform, bei der die Wand 4 durch eine Stoßfängerverkleidung gebildet ist, kann die Stoßfängerverkleidung (Wand 4) an ihrer Außenseite 9 mit einer Lackierung 7 versehen sein. Vorzugsweise besitzt dann auch der Deckel 2 an seiner Vorderseite 11 eine derartige Lackierung 12, um den Deckel 2 in seiner Schließstellung auch optisch und haptisch in die Wand 4 zu integrieren.

Der Wandabschnitt 10 weist an seiner in der Schließstellung von der Wandaußenseite 9 abgewandten Rückseite 13 zwei Widerhaken 14 auf. Diese Widerhaken 14 stehen bezüglich der Kippachse 8 im wesentlichen radial über einen Rand 15 des Wandabschnitts 10 bzw. des Deckels 2 vor. In der Schließstellung gemäß Fig. 2 hintergreifen die Widerhaken 14 den Rand 16 der Öffnung 3. und liegen dabei an der Wandinnenseite 5 an.

An seiner Rückseite 13 weist der Wandabschnitt 10 außerdem zwei Rasthaken 17 auf, die bezüglich der Kippachse 8 den Widerhaken 14 gegenüberliegend angeordnet sind. Die Rasthaken 17 stehen bezüglich der Kippachse 8 in der Dreh-, Schwenkoder Kipprichtung des Deckels 2 von der Rückseite 13 des Wandabschnitts 10 ab. In der Schließstellung sind die Rasthaken 17 an einer entsprechenden Rastkontur 18 eingerastet, die wandfest ausgebildet ist. Die Rasthaken 17 sind dabei bezüglich der Kippachse 8 radial federnd nachgiebig ausgebildet, wodurch eine zerstörungsfrei lösbare Verrastung realisierbar ist.

An seiner Rückseite 13 weist der Wandabschnitt 10 außerdem zwei erste Führungskonturen 19 und zwei zweite Führungskonturen 20 auf. Die ersten Führungskonturen 19 wirken mit einer ersten Führung 21 zusammen, die wandfest ausgebildet ist. Im Unterschied dazu wirken die zweiten Führungskonturen 20 mit einer zweiten Führung 22 zusammen, die ebenfalls wandfest ausgebildet ist.

### Der Deckel 2 funktioniert wie folgt:

In der in Fig. 2 dargestellten Schließstellung ist der Deckel 2 selbsthaltend in der Öffnung 3 angeordnet und an der Wand 4 festgelegt. Diese Schließstellung wird dabei durch das Zusammenwirken der ersten Führungskonturen 19 mit der ersten Führung 21 definiert, wodurch sich eine vorbestimmte Relativlage zwischen Deckel 2 und Wand 4 ergibt. Zweckmäßig ist diese gewünschte Relativlage so gewählt, daß im Randbereich zwischen Deckel 2 und Wand 4 ein gewünschter Spalt 23 auftritt, der entlang des Deckelaußenrands 15 und des Öffnungsinnenrands 16 vorzugsweise eine konstante Spaltbreite besitzt. Um den Deckel 2 von seiner Schließstellung in seine Kippstellung zu überführen, wird entsprechend einem Pfeil 24 an der Vorderseite 11 des Wandabschnitts 10 in einem bezüglich der Kippachse 8 den Rasthaken 17 gegenüberliegenden Bereich eine Druckkraft in den Deckel 2 eingeleitet, beispielsweise drückt der Benutzer mit einem Finger entsprechend dem Pfeil 24 gegen den Deckel 2. Diese Druckkraft 24 wird durch die Auflagekontur 6 über die Kippachse 8 in eine Zugkraft an den Rasthaken 17 umgewandelt. Ist die Druckkrafteinwirkung 24 hinreichend groß, können die Rasthaken 17 aufgrund der gewählten Formgebung von Rasthaken 17 und Rastkontur 18 bezüglich der Kippachse 8 radial nachgeben, so daß die Rasthaken 17 von ihrer Rastkontur 18 ausrasten und freikommen.

Dementsprechend kann dann der Deckel 2 um die Kippachse 8 in seine Kippstellung schwenken.

Die Kippstellung wird hinsichtlich ihres Schwenkwinkels im wesentlichen durch die Auflagekontur 6 definiert. Beim Verschwenken in die Kippstellung wirken jedoch zusätzlich die zweiten Führungskonturen 20 mit der zweiten Führung 22 zusammen, wodurch der Deckel 2 bei der Überführung in seine Kippstellung zwangsgeführt ist, so daß sich bei Erreichen der Kippstellung eine definierte, gewünschte Relativlage zwischen Deckel 2 und Wand 4 einstellt.

Mit Hilfe der Führungskonturen 19 und 20 in Verbindung mit den Führungen 21 und 22 kann somit sichergestellt werden, daß der Deckel 2 beim Verschwenken zwischen seinen beiden Endstellungen stets einen Mindestabstand zum Öffnungsrand 16 aufweist, so.daß die Gefahr einer Beschädigung am Öffnungsrand 16 und/oder am Deckelrand 15, insbesondere der Lackierungen 7, 12, reduziert ist.

In der Kippstellung kann nun der Deckel 2 aus der Öffnung 3 herausgezogen werden. Die Öffnung 3 ist dann offen. Soll die Öffnung 3 wieder verschlossen werden, kann zunächst der Deckel 2 in die Öffnung 3 so weit eingeführt werden, daß er seine Kippstellung einnimmt. Anschließend kann der Deckel 2 durch eine Druckkraft, die an der Vorderseite 11 in einem bezüglich der Kippachse 8 den Widerhaken 14 gegenüberliegenden Bereich angreift, in seine Schließstellung zurückgeschwenkt werden. Hierbei wirken die ersten Führungskonturen 19 mit der ersten Führung 21 zusammen und zwingen den Deckel 2 zum Erreichen seiner Schließstellung in die vorbestimmte, gewünschte Relativlage zwischen Deckel 2 und Wand 4. Sobald der Deckel 2 seine gewünschte Schließstellung erreicht, rasten die Rasthaken 17 an der Rastkontur 18 ein. Die Kurvenbahn, welche der Deckel 2 an seinem Außenrand 15 beschreibt, ist in Fig. 2 durch eine unterbrochene Linie 25 angedeutet.

Mit Hilfe der Führungskonturen 19,20 und der Führungen 21,22 wird die Relativlage des Deckels 2 bezüglich der Kippachse 8 in radialer Richtung definiert. Für eine Führung parallel zur Kippachse 8 kann an der Rückseite 13 des Wandabschnitts 10 ein Seitenführungsteil 26 ausgebildet sein, das von der Rückseite 13 absteht und axial am Öffnungsrand 16, insbesondere an dessen Auflagekontur 6 axial anliegt und zur Führung damit zusammenwirkt. Es ist klar, daß auch zwei oder mehr derartige Seitenführungselemente 26 vorgesehen sein können. Des weiteren kann das Seitenführungselement 26 eine seitliche Führungskontur besitzen, die beim Verschwenken des Deckels 2 in seine Schließstellung eine Zentrierung des Deckels 2 in axialer Richtung erzwingt.

Bei der hier gezeigten Ausführungsform sind die beiden ersten Führungskonturen 19 und die beiden zweiten Führungskonturen 20 so an der Rückseite 13 des Wandabschnitts 10 angeordnet, daß sie einander bezüglich der Kippachse 8 gegenüberliegen. Hierdurch wird erreicht, daß die einen Führungskonturen 19 der Schließstellung und die anderen Führungskonturen 20 der Kippstellung zugeordnet sind. Dementsprechend sind bei dieser Ausführungsform auch die erste Führung 21 und die zweite Führung 22 im Bereich der Öffnung 3 an der Wand 4 so angeordnet, daß sie sich bezüglich der Kippachse 8 gegenüberliegen.

Da die ersten Führungskonturen 19 der Schließstellung zugeordnet sind, sind diese bezüglich der Kippachse 8 auf derselben Seite wie die Rasthaken 17 an der Rückseite 13 des Wandabschnitts 10 angebracht. Zweckmäßig sind die ersten Führungskonturen 19 und die Rasthaken 17 dabei nur relativ geringfügig bezüglich der Kippachse 8 in radialer Richtung voneinander beabstandet. Durch diese Bauweise können die erste Führung 21 und die Rastkontur 18 am gleichen wandfesten Bauteil 27 ausgebildet werden. Dieses Bauteil 27 ist bei der hier gezeigten Ausführungsform als Steg ausgebildet, der sich im Randbereich der Öffnung 3 im wesentlichen parallel zur Kippachse 8 erstreckt. In der Schließstellung gemäß Fig.2 ist dieser Steg 27 bezüglich der Kippachse 8 radial zwischen den Rasthaken 17 und den ersten Führungskonturen 19 angeordnet. Des weiteren liegt der Wandabschnitt 10 mit seiner Rückseite 13 an diesem Steg 27 an, wenn der Deckel 2 seine Schließstellung einnimmt. Im Bereich dieses Bauteils oder Stegs 27 kann am Öffnungsrand 16 außerdem eine Stufe 28 ausgebildet sein, die in der Schließstellung eine zusätzliche Auflage für den Deckelrand 15 bildet.

Damit die zweiten Führungskonturen 20 der Kippstellung des Deckels 2 zugeordnet sind, sind diese bezüglich der Kippachse 8 den Rasthaken 17 gegenüberliegend an der Rückseite 13 des Wandabschnitts 10 angebracht. Zweckmäßig ist auch hier die zweite Führung 22 an einem stegförmigen Bauteil 29 ausgebildet, wobei sich dieser Steg 29 im Randbereich der Öffnung 3 im wesentlichen parallel zur Kippachse 8 erstreckt. Dieser Steg 29 kann so geformt sein, daß der Wandabschnitt 10 in der Kippstellung des Deckels 2 mit seiner Rückseite 13 auf dem Steg 29 aufliegt. Vorzugsweise sind der den ersten Führungskonturen 19 zugeordnete erste Steg 27 und der den zweiten Führungskonturen 20 zugeordnete zweite Steg 29 jeweils nahe am Öffnungsrand 16 angeordnet, um eine möglichst große Öffnungsweite für die Öffnung 3 zu ermöglichen, wenn der Deckel 2 entfernt ist.

Die beiden ersten Führungskonturen 19 sind über einen ersten Quersteg 30 miteinander verbunden, der ebenfalls von der Rückseite 13 des Wandabschnitts 10 absteht. In entsprechender Weise sind auch die beiden zweiten Führungskonturen 20 über einen zweiten Quersteg 31 miteinander verbunden, der ebenfalls von der Rückseite 13 des Wandabschnitts 10 absteht.

Entsprechend einer bevorzugten Ausführungsform ist der Wandabschnitt 10 zusammen mit den Widerhaken 14, den Rasthaken 17, den Führungskonturen 19,20, dem oder den Seitenführungselementen 26 und den Querstegen 30,31 als einteiliges oder einstückiges Bauteil, insbesondere als Spritzgußbauteil ausgebildet. Zur Fertigstellung des Deckels 2 kann der Wandabschnitt 10 an seiner Vorderseite 11 gegebenenfalls mit der Lackierung 12 versehen werden.

## Patentansprüche

1. Deckel zum Verschließen einer Öffnung (3), die in einer Wand (4), insbesondere eines Verkleidungsteils eines Kraftfahrzeugs, ausgebildet ist,
- wobei die Wand (4) an ihrer Innenseite (5) im Bereich der Öffnung (3) eine Auflagekontur (6) für den Deckel (2) aufweist, die es ermöglicht, den in die Öffnung (3) eingesetzten Deckel (2) zwischen einer Schließstellung, in welcher der Deckel (2) die Öffnung (3) verschließt, und einer Kippstellung um eine Kippachse (8) zu verschwenken, in welcher der Deckel (2) gegenüber seiner Schließstellung gekippt ist und an der Außenseite (9) der Wand (4) aus der Öffnung (3) herausnehmbar und/oder in die Öffnung (3) einsetzbar ist,
- wobei der Deckel (2) einen Wandabschnitt (10) aufweist, der im wesentliche komplementär zu Öffnung (3) geformt ist und diese in der Schließstellung im wesentlichen ausfüllt,
- wobei der Wandabschnitt (10) an seiner in der Schließstellung von der Wandaußenseiten (9) abgewandten Rückseite (13) wenigstens einen Widerhaken (14) aufweist, der bezüglich der Kippachse (8) im wesentlichen radial über einen Rand (15) des Wandabschnitts (10) vorsteht und in der Schließstellung, einen Rand (16) der Öffnung (3) hintergreift,
- wobei der Wandabschnitt (10) an seiner Rückseite (13) bezüglich der Kippachse (8) dem wenigstens einen Widerhaken (14) gegenüberliegend wenigstens einen Rasthaken (17) aufweist, der bezüglich der Kippachse (8) im wesentlichen in Drehrichtung von der Rückseite (13) absteht und in der Schließstellung an einer wandfesten Rastkontur (18) eingerastet ist,
**dadurch gekennzeichnet, dass**
- in der Schließstellung eine Druckkrafteinwirkung (24) an einer von der Rückseite (113) abgewandten Vorderseite (11) des Wandabschnitts (10) in einem bezüglich der Kippachse (8) dem wenigstens einen Rasthaken (17) gegenüberliegenden Bereich zum Ausrasten des wenigstens einen Rasthakens (17) von der Rastkontur (18) und zum Schwenken des Deckels (2) aus seiner Schließstellung in seine Kippstellung führt,
- wobei der Wandabschnitt (10) an seiner Rückseite (13) wenigstens eine erste Führungskontur (19) und/oder wenigstens eine zweite Führungskontur (20) aufweist,
- wobei die wenigstens eine erste Führungskontur (19) beim Verschwenken des Deckels (2) von der Kippstellung in die Schließstellung mit einer wandfesten ersten Führung (21) zusammenwirkt, derart, daß der Deckel (2) in der Schließstellung eine vorbestimmte Relativlage zur Wand (4) einnimmt,
- wobei die wenigstens eine zweite Führungskontur (20) beim Verschwenken des Deckels (2) von der Schließstellung in die Kippstellung mit einer wandfesten zweiten Führung (22) zusammenwirkt, derart, daß der Deckel (2) in der Kippstellung eine vorbestimmte Relativlage zur Wand (4) einnimmt.

2. Deckel nach Anspruch 1,
**dadurch gekennzeichnet,**
**daß** die wenigstens eine erste Führungskontur (19) und die wenigstens eine zweite Führungskontur (20) bezüglich der Kippachse (8) einander gegenüberliegend an der Rückseite (13) des Wandabschnitts (10) angeordnet sind.

3. Deckel nach Anspruch 2,
**dadurch gekennzeichnet,**
**daß** die erste Führung (21) und die zweite Führung (22) bezüglich der Kippachse (8) einander gegenüberliegend im Bereich der Öffnung (3) an der Wand (4) angeordnet sind.

4. Deckel nach einem der Ansprüche 1 bis 3,
**dadurch gekennzeichnet,**
**daß** die wenigstens eine erste Führungskontur (19) und der wenigstens eine Rasthaken (17) bezüglich der Kippachse (8) auf derselben Seite an der Rückseite (13) des Wandabschnitts (10) angeordnet sind.

5. Deckel nach einem der Ansprüche 1 bis 4,
**dadurch gekennzeichnet,**
**daß** die erste Führung (21) und die Rastkontur (18) am gleichen wandfesten Bauteil (27) ausgebildet sind, das in der
Schließstellung zwischen dem wenigstens einen Rasthaken (17) und der wenigstens einen ersten Führungskontur (19) angeordnet ist.

6. Deckel nach einem der Ansprüche 1 bis 5,
**dadurch gekennzeichnet,**
**daß** die erste Führung (21) an einem ersten Steg (27) ausgebildet ist, der sich im Randbereich der Öffnung (3) im wesentliche parallel zur Kippachse (8) erstreckt und auf dem der Wandabschnitt (10) in der Schließstellung mit seiner Rückseite (13) aufliegt.

7. Deckel nach einem der Ansprüche 1 bis 6,
**dadurch gekennzeichnet,**
**daß** die wenigstens eine zweite Führungskontur (20) und der wenigstens eine Rasthaken (17) bezüglich der Kippachse (8) einander gegenüberliegend an der Rückseite (13) des Wandabschnitts (10) angeordnet sind.

8. Deckel nach einem der Ansprüche 1 bis 7,
**dadurch gekennzeichnet,**
**daß** die zweite Führung (22) an einem zweiten Steg (29) ausgebildet ist, der sich im Randbereich der Öffnung (3) im wesentlichen parallel zur Kippachse (8) erstreckt und auf dem der Wandabschnitt (10) in der Kippstellung mit seiner Rückseite (13) aufliegt.

9. Deckel nach einem der Ansprüche 1 bis 8,
**dadurch gekennzeichnet,**
**daß** die Vorderseite (11) des Wandabschnitts (10) so geformt ist, daß sie in der Schließstellung einen formintegralen Bestandteil der Wand (4) bildet.

10. Deckel nach einem der Ansprüche 1 bis 9,
**dadurch gekennzeichnet,**
**daß** zwei erste Führungskonturen (19) vorgesehen sind, die über
einen ersten Quersteg (30) miteinander verbunden sind, und/oder daß zwei zweite Führungskönturen (20) vorgesehen sind, die über einen zweiten Quersteg (31) miteinander verbunden sind.

11. Deckel nach einem der Ansprüche 1 bis 10,
**dadurch gekennzeichnet,**
**daß** die Wand (4) durch eine Stoßfängerverkleidung eines Kraftfahrzeugs gebildet ist, wobei die Öffnung (3) einen Zugriff zu einer Schleppeinrichtung, z.B. Abschleppöse oder Abschlepphaken, des Kraftfahrzeugs durch die Stoßfängerverkleidung (4) hindurch ermöglicht.

12. Deckel-Wand-Anordnung, insbesondere eines Verkleidungsteils eines Kraftfahrzeugs,
- mit einem Deckel (2) zum Verschließen einer Öffnung (3), die in einer Wand (4) ausgebildet ist,
- wobei die Wand (4) an ihrer Innenseite (5) im Bereich der Öffnung (3) eine Auflagekontur (6) für den Deckel (2) aufweist, die es ermöglicht, den in die.Öffnung (3) eingesetzten Deckel (2) zwischen einer Schließstellung, in welcher der Deckel (2) die Öffnung (3) verschließt, und einer Kippstellung um eine Kippachse (8) zu verschwenken, in welcher der Deckel (2) gegenüber seiner Schließstellung gekippt ist und an der Außenseite. (9) der Wand (4) aus der Öffnung (3) herausnehmbar und/oder in die Öffnung (3) einsetzbar ist,
- wobei der Deckel (2) einen Wandabschnitt (10) aufweist, der im wesentliche komplementär zu Öffnung (3) geformt ist und diese in der Schließstellung im wesentlichen ausfüllt,
- wobei der Wandabschnitt (10) an seiner in der Schließstellung von der Wandaußenseiten (9) abgewandten Rückseite (13) wenigstens einen Widerhaken (14) aufweist, der bezüglich der Kippachse (8) im wesentlichen radial über einen Rand (15) des Wandabschnitts (10) vorsteht und in der Schließstellung einen Rand (16) der Öffnung (3) hintergreift, ..
- wobei der Wandabschnitt (10) an seiner Rückseite (13) bezüglich der Kippachse (8) dem wenigstens einen Widerhaken (14) gegenüberliegend wenigstens einen Rasthaken (17) aufweist, der bezüglich der Kippachse (8) im wesentliche in Drehrichtung von der Rückseite (13) absteht und in der Schließstellung an einer wandtesten Rastkontur (18) eingerastet ist,
**dadurch gekennzeichnet, dass**
- in der Schließstellung eine Druckkrafteinwirkung (24) an einer von der Rückseite (13) abgewandten Vorderseite (11) des Wandabschnitts (10) in einem bezüglich der Kippachse (8) dem wenigstens einen Rasthaken (17) gegenüberliegenden Bereich zum Ausrasten des wenigstens einen Rasthakens (17) von der Rastkontur (18) und zum Schwenken des Deckels (2) aus seiner Schließstellung in seine Kippstellung führt,
- wobei der Wandabschnitt (10) an seiner Rückseite (13) wenigstens eine erste Führungskontur (19) und/oder wenigstens eine zweite Führungskontur (20) aufweist,
- wobei die wenigstens eine erste Führungskontur (19) beim Verschwenken des Deckels (2) von der Kippstellung in die Schließstellung mit einer wandfesten ersten Führung (21) zusammenwirkt, derart, daß der Deckel (2) in der Schließstellung eine vorbestimmte Relativlage zur Wand (4) einnimmt,
- wobei die wenigstens eine zweite Führungskontur (20) beim Verschwenken des Deckels (2) von der Schließstellung in die Kippstellung mit einer wandfesten zweiten Führung (22) zusammenwirkt, derart, daß der Deckel (2) in der Kippstellung eine vorbestimmte Relativlage zur Wand (4) einnimmt.

13. Deckel-Wand-Anordnung nach Anspruch 12, **gekennzeichnet durch** die kennzeichnenden Merkmale wenigstens eines der Ansprüche 2 bis 11.

## Claims

1. A lid for closing an opening (3) which is formed in a wall (4), in particular of a covering portion of a motor vehicle,
- wherein the wall (4) has on its inside (5) in the region of the opening (3) a supporting contour (6) for the lid (2) that enables the lid (2) that is inserted into the opening (3) to be swivelled about a tilt axis (8) between a closed position, in which the lid (2) closes the opening (3), and a tilted position, in which the lid (2) is tilted with respect to its closed position and can be removed from the opening (3) and/or inserted into the opening (3) on the outside (9) of the wall (4),
- wherein the lid (2) has a wall section (10) which is shaped so as to be substantially complementary to opening (3) and substantially fills the latter in the closed position,
- wherein the wall section (10) has on its rear side (13) that faces away from the wall outsides (9) in the closed position at least one barb (14) which with regard to the tilt axis (8) protrudes substantially radially over an edge (15) of the wall section (10) and in the closed position engages behind an edge (16) of the opening (3),
- wherein the wall section (10) has on its rear side (13) lying opposite the at least one barb (14) with regard to the tilt axis (8) at least one locating hook (17) which with regard to the tilt axis (8) projects from the rear side (13) substantially in the direction of rotation and is latched on a locating contour (18), which is fixed with respect to the wall, in the closed position,
**characterised in that**
- in the closed position a pressure-force action (24) on a front side (11) of the wall section (10) that faces away from the rear side (13) in a region which with regard to the tilt axis (8) lies opposite the at least one locating hook (17) leads to the unlatching of the at least one locating hook (17) from the locating contour (18) and to the swivelling of the lid (2) out of its closed position into its tilted position,
- wherein the wall section (10) has on its rear side (13) at least one first guide contour (19) and/or at least one second guide contour (20),
- wherein when the lid (2) is swivelled from the tilted position into the closed position the at least one first guide contour (19) co-operates with a first guide (21), which is fixed with respect to the wall, in such a way that in the closed position the lid (2) occupies a predetermined relative position with respect to the wall (4),
- wherein when the lid (2) is swivelled from the closed position into the tilted position the at least one second guide contour (20) co-operates with a second guide (22), which is fixed with respect to the wall, in such a way that in the tilted position the lid (2) occupies a predetermined relative position with respect to the wall (4).

2. A lid according to claim 1,
**characterised in that**
the at least one first guide contour (19) and the at least one second guide contour (20) are arranged on the rear side (13) of the wall section (10) lying opposite each other with regard to the tilt axis (8).

3. A lid according to claim 2,
**characterised in that**
the first guide (21) and the second guide (22) are arranged on the wall (4) in the region of the opening (3) lying opposite each other with regard to the tilt axis (8).

4. A lid according to one of claims 1 to 3,
**characterised in that**
the at least one first guide contour (19) and the at least one locating hook (17) are arranged on the rear side (13) of the wall section (10) on the same side with regard to the tilt axis (8).

5. A lid according to one of claims 1 to 4,
**characterised in that**
the first guide (21) and the locating contour (18) are formed on the same component (27) which is fixed with respect to the wall and which in the closed position is arranged between the at least one locating hook (17) and the at least one first guide contour (19).

6. A lid according to one of claims 1 to 5,
**characterised in that**
the first guide (21) is formed on a first web (27) which extends in the edge region of the opening (3) substantially parallel to the tilt axis (8) and on which the wall section (10) is supported in the closed position with its rear side (13).

7. A lid according to one of claims 1 to 6,
**characterised in that**
the at least one second guide contour (20) and the at least one locating hook (17) are arranged on the rear side (13) of the wall section (10) lying opposite each other with regard to the tilt axis (8).

8. A lid according to one of claims 1 to 7,
**characterised in that**
the second guide (22) is formed on a second web (29) which extends in the edge region of the opening (3) substantially parallel to the tilt axis (8) and on which the wall section (10) is supported in the tilted position with its rear side (13).

9. A lid according to one of claims 1 to 8,
**characterised in that**
the front side (11) of the wall section (10) is shaped in such a way that in the closed position it forms an integrally shaped constituent part of the wall (4).

10. A lid according to one of claims 1 to 9,
**characterised in that**
two first guide contours (19) are provided that are connected together by way of a first cross-web (30), and/or **in that** two second guide contours (20) are provided that are connected together by way of a second cross-web (31).

11. A lid according to one of claims 1 to 10,
**characterised in that**
the wall (4) is formed by a bumper covering of a motor vehicle, wherein the opening (3) enables there to be access to a towing device, for example a towing lug or towing hook, of the motor vehicle through the bumper covering (4).

12. A lid-wall-arrangement, in particular of a covering portion of a motor vehicle,
- having a lid (2) for closing an opening (3) which is formed in a wall (4),
- wherein the wall (4) has on its inside (5) in the region of the opening (3) a supporting contour (6) for the lid (2) that enables the lid (2) that is inserted into the opening (3) to be swivelled about a tilt axis (8) between a closed position, in which the lid (2) closes the opening (3), and a tilted position, in which the lid (2) is tilted with respect to its closed position and can be removed from the opening (3) and/or inserted into the opening (3) on the outside (9) of the wall (4),
- wherein the lid (2) has a wall section (10) which is shaped so as to be substantially complementary to opening (3) and substantially fills the latter in the closed position,
- wherein the wall section (10) has on its rear side (13) that faces away from the wall outsides (9) in the closed position at least one barb (14) which with regard to the tilt axis (8) protrudes substantially radially over an edge (15) of the wall section (10) and in the closed position engages behind an edge (16) of the opening (3),
- wherein the wall section (10) has on its rear side (13) lying opposite the at least one barb (14) with regard to the tilt axis (8) at least one locating hook (17) which with regard to the tilt axis (8) projects from the rear side (13) substantially in the direction of rotation and is latched on a locating contour (18), which is fixed with respect to the wall, in the closed position,
**characterised in that**
- in the closed position a pressure-force action (24) on a front side (11) of the wall section (10) that faces away from the rear side (13) in a region which with regard to the tilt axis (8) lies opposite the at least one locating hook (17) leads to the unlatching of the at least one locating hook (17) from the locating contour (18) and to the swivelling of the lid (2) out of its closed position into its tilted position,
- wherein the wall section (10) has on its rear side (13) at least one first guide contour (19) and/or at least one second guide contour (20),
- wherein when the lid (2) is swivelled from the tilted position into the closed position the at least one first guide contour (19) co-operates with a first guide (21), which is fixed with respect to the wall, in such a way that in the closed position the lid (2) occupies a predetermined relative position with respect to the wall (4),
- wherein when the lid (2) is swivelled from the closed position into the tilted position the at least one second guide contour (20) co-operates with a second guide (22), which is fixed with respect to the wall, in such a way that in the tilted position the lid (2) occupies a predetermined relative position with respect to the wall (4).

13. A lid-wall arrangement according to claim 12, **characterised by** the characterising features of at least one of claims 2 to 11.

## Revendications

1. Couvercle de fermeture d'une ouverture (3) réalisée dans une paroi (4), notamment une partie de revêtement d'un véhicule automobile, étant précisé que :
- la paroi (1) présente sur sa face interne (5), dans la zone de l'ouverture (3), pour accueillir le couvercle (2), un contour d'appui (6) qui permet, quand le couvercle (2) est logé dans l'ouverture (3) de le faire passer par rotation autour d'un axe de basculement (8) d'une position de fermeture dans laquelle il obture l'ouverture (2), à une position de basculement où le couvercle est basculé par rapport à sa position de fermeture et, sur la face externe (9) de la paroi (4), de l'extraire de l'ouverture (3) et/ou de l'insérer dans celle-ci,
- le couvercle (2) présente une partie de paroi (10) dont la forme est essentiellement complémentaire de celle de l'ouverture (3) et qui remplit essentiellement celle-ci en position de fermeture,
- la partie de paroi (10) présente, sur sa face arrière (13) qui, en position de fermeture, est à l'opposé des faces externes (9) de la paroi, une dent (14) qui, par rapport à l'axe de basculement (8), fait saillie essentiellement en direction radiale sur le bord (15) de la partie de paroi (10) et qui, en position de fermeture est en prise par derrière avec un bord (16) de l'ouverture (3),
- la partie de paroi (10) présente sur sa face arrière (13) au moins un crochet d'arrêt (17) qui, par rapport à l'axe de basculement (8) se trouve à l'opposé de la dent (14) au nombre d'une au moins et qui, par rapport à l'axe de basculement fait saillie sur la face arrière (13) essentiellement selon la direction de rotation et, en position de fermeture, est bloqué le long d'un contour d'arrêt (18) solidaire de la paroi,
le couvercle présentant les caractéristiques suivantes :
- en position de fermeture, sur la face avant (11) de la partie de paroi (10) située à l'opposé de la face arrière (13), dans une zone située à l'opposé du crochet d'arrêt (17) au nombre d'un au moins, s'exerce l'action d'une force de poussée (24) afin de dégager du contour d'arrêt (18) le crochet d'arrêt (17) au nombre d'un au moins et de faire passer, par basculement, le couvercle (2) de sa position de fermeture à sa position basculée,
- la partie de paroi (10) présente sur sa face arrière (13) au moins un premier contour de guidage (19) et/ou au moins un second contour de guidage (20),
- le premier contour de guidage (19) au nombre d'un au moins, lors de la rotation du couvercle (2) passant de la position basculée à la position de fermeture, coopère avec un premier guidage (21) solidaire de la paroi de manière que le couvercle (2) vient prendre en position de fermeture une position prédéterminée par rapport à la paroi (4),
- le second contour de guidage (20) au nombre d'un au moins, lors de la rotation du couvercle (2) passant de la position de fermeture à la position basculée, coopère avec un second guidage (22) solidaire de la paroi de sorte que le couvercle (2) vient prendre en position basculée, une position prédéterminée par rapport à la paroi (4).

2. Couvercle selon la revendication 1, **caractérisé en ce que** le premier contour de guidage (19) au nombre d'un au moins et le second contour de guidage (20) au nombre d'un au moins sont disposés sur la face arrière (13) de la partie de paroi (10) et à l'opposé l'un de l'autre par rapport à l'axe de basculement (8).

3. Couvercle selon la revendication 2, **caractérisé en ce que** le premier guidage (21) et le second guidage (22) sont disposés sur la paroi (4) dans la zone de l'ouverture (3) et à l'opposé l'un de l'autre par rapport à l'axe de basculement (8).

4. Couvercle selon une des revendications précédentes, **caractérisé en ce que** le premier contour de guidage (19) au nombre d'un au moins et le crochet d'arrêt (17) au nombre d'un au moins sont disposés, par rapport à l'axe de basculement (8) sur le même côté de la face arrière (13) de la partie de paroi (10).

5. Couvercle selon une des revendications 1 à 4, **caractérisé en ce que** le premier guidage (21) et le contour d'arrêt (18) sont disposés sur le même composant (27) qui, en position de fermeture, se trouve entre le crochet d'arrêt (17) au nombre d'un au moins et le premier contour de guidage (19) au nombre d'un au moins.

6. Couvercle selon une des revendications 1 à 5, **caractérisé en ce que** le premier guidage (21) est réalisé sur une première nervure (27) qui s'étend dans la zone du bord de l'ouverture (3) essentiellement parallèlement à l'axe de basculement (8) et sur laquelle la partie de paroi (10) repose par sa face arrière (13), en position de fermeture.

7. Couvercle selon une des revendications 1 à 6, **caractérisé en ce que** le second contour de guidage (20) au nombre d'un au moins et le crochet d'arrêt (17) au nombre d'un au moins sont disposés sur la face arrière (13) de la partie de paroi (10) et à l'opposé l'un de l'autre par rapport à l'axe de basculement.

8. Couvercle selon une des revendications 1 à 7, **caractérisé en ce que** le second guidage (22) est réalisé sur une seconde nervure (29) qui s'étend dans la zone du bord de l'ouverture (3) essentiellement parallèlement à l'axe de basculement (8) et sur laquelle la partie de paroi (10) repose par sa face arrière (13), en position de basculement.

9. Couvercle selon une des revendications 1 à 8, **caractérisé en ce que** la face avant (11) de la partie de paroi (10) a une forme telle qu'en position de fermeture elle constitue un composant intégral de la paroi (4).

10. Couvercle selon une des revendications 1 à 9, **caractérisé en ce qu'**il est prévu deux premiers contours de guidage (19) qui sont reliés par une première nervure transversale (30) et/ou il est prévu deux seconds contours de guidage (20) qui sont reliés par une seconde nervure transversale (31).

11. Couvercle selon une des revendications 1 à 10, **caractérisé en ce que** la paroi (4) est constituée par le revêtement d'un pare-chocs d'un véhicule automobile, de sorte que l'ouverture (3) permet d'accéder à un dispositif de remorquage, par exemple un anneau ou un crochet de remorquage du véhicule, à travers le revêtement de pare-chocs (4).

12. Système de couvercle et de paroi, notamment dans une partie de revêtement d'un véhicule automobile, qui comporte un couvercle (2) pour obturer une ouverture (3) réalisée dans une paroi (4), étant précisé que
- la paroi (1) présente sur sa face interne (5), dans la zone de l'ouverture (3), pour accueillir le couvercle (2), un contour d'appui (6) qui permet, quand le couvercle (2) est logé dans l'ouverture (3) de le faire passer en rotation autour d'un axe de basculement (8) d'une position de fermeture dans laquelle il obture l'ouverture (2), à une position de basculement où le couvercle est basculé par rapport à sa position de fermeture et, sur la face externe (9) de la paroi (4), de l'extraire de l'ouverture (3) et/ou de l'insérer dans celle-ci,
- le couvercle (2) présente une partie de paroi (10) dont la forme est essentiellement complémentaire de celle de l'ouverture (3) et qui remplit essentiellement celle-ci en position de fermeture,
- la partie de paroi (10) présente, sur sa face arrière (13) qui, en position de fermeture, est à l'opposé des faces externes (9) de la paroi, au moins une dent (14) qui, par rapport à l'axe de basculement (8), fait saillie essentiellement en direction radiale sur le bord (15) de la partie de paroi (10) et qui, en position de fermeture est en prise par derrière avec un bord (16) de l'ouverture (3),
- la partie de paroi (10) présente sur sa face arrière (13) au moins un crochet d'arrêt (17) qui, par rapport à l'axe de basculement (8) se trouve à l'opposé de la dent (14) au nombre d'une au moins et qui, par rapport à l'axe de basculement fait saillie sur la face arrière (13) essentiellement dans le sens de rotation et, en position de fermeture, est bloqué le long d'un contour d'arrêt (18) solidaire de la paroi,
ce système présentant les caractéristiques suivantes :
- en position de fermeture, sur la face avant (11) de la partie de paroi (10) située à l'opposé de la face arrière (13), dans une zone située à l'opposé du crochet d'arrêt (17) au nombre d'un au moins, s'exerce l'action d'une force de poussée (24) afin de dégager du contour d'arrêt (18) le crochet d'arrêt (17) au nombre d'un au moins et de faire passer, par basculement, le couvercle (2) de sa position de fermeture à sa position basculée,
- la partie de paroi (10) présente sur sa face arrière (13) au moins un premier contour de guidage (19) et/ou au moins un second contour de guidage (20),
- le premier contour de guidage (19) au nombre d'un au moins, lors du basculement du couvercle (2) passant de la position basculée à la position de fermeture, coopère avec un premier guidage (21) solidaire de la paroi de manière que le couvercle (2) vient prendre en position de fermeture une position prédéterminée par rapport à la paroi (4),
- le second contour de guidage (20) au nombre d'un au moins, lors de la rotation du couvercle (2) passant de la position de fermeture à la position basculée, coopère avec un second guidage (22) solidaire de la paroi de sorte que le couvercle (2) vient prendre en position basculée, une position prédéterminée par rapport à la paroi (4).

13. Système de couvercle et de paroi selon la revendication 12, **caractérisé en ce qu'**il présente les caractéristiques d'au moins une des revendications 2 à 11.
